Europäisches Patentamt

European Patent Office

Office européen des brevets

(11) Publication number : **0 497 501 A1**

# (12) EUROPEAN PATENT APPLICATION

(21) Application number : **92300576.3**

(22) Date of filing : **23.01.92**

(51) Int. Cl.⁵ : **B65D 53/06, C09K 3/10**

(30) Priority : **31.01.91 GB 9102117**

(43) Date of publication of application :
**05.08.92 Bulletin 92/32**

(84) Designated Contracting States :
**AT BE CH DE DK ES FR GB GR IT LI LU NL PT SE**

(71) Applicant : **W.R. Grace & Co.-Conn.**
**1114 Avenue of the Americas**
**New York New York 10036 (US)**

(72) Inventor : **Hewitt, John Sidney**
**19 Wycliffe Grove**
**Werrington, Peterborough PE4 5DE (GB)**

(74) Representative : **Barlow, Roy James et al**
**J.A. KEMP & CO. 14, South Square, Gray's Inn**
**London WC1R 5LX (GB)**

(54) **Curing of plastisol material.**

(57)    A thermoplastic closure, for example of polypropylene, is lined with a plastisol heated by electromagnetic radiation, either radio-frequency heating or microwave heating, to which the closure is transparent. Preferably before and optionally during the exposure to radiation the closure and plastisol combination is heated by hot air.

The plastisol comprises a polymer other than polyvinyl chloride in suspension in a plasticizer.

Various different plasticizers and polymers are disclosed.

FIG. 1

EP 0 497 501 A1

The present invention relates to the use of a plastisol cured to form the gasket of a thermoplastic container closure.

Conventionally container closures have been lined with a PVC-based plastisol, comprising particles of polyvinyl chloride in suspension in a plasticizer which is liquid at room temperature, thereby taking the form of a paste.

The term plastisol is generally understood to mean a dispersion of finely divided thermoplastic resin particles in a liquid non-volatile plasticizer in which the resin is insoluble or only very slightly soluble, at room temperature. At elevated temperatures the pasty plastisol forms a gel or crumbling mass, and at still further elevated temperatures the plastisol fluxes to form a rubbery thermoplastic mass.

If the plasticizer is one which reacts with the resin then a thermoset mass may be obtained.

In addition to the resin and the plasticizer, the plastisol formulation may also contain fillers, pigments, stabilizers and other conventional compounding ingredients.

In order to flux the plastisol in this way, for the purposes of providing a mass which has shape to be retained on subsequent cooling, heat must be applied to the plastisol.

When using the plastisol composition as a liner for a plastic closure, there is the problem that the application of heat to the plastisol must not cause distortion of the plastic used for the closure itself. It is therefore advantageous to apply the heat selectively to the plastisol but not to the closure in which the plastisol is to form a gasket.

In the case of polyvinyl chloride plastisols, this problem has in the past been tackled by exposing the combination of the plastisol and the closure to electromagnetic radiation to which the closure may be transparent so that the radiation warms the plastisol but not the closure. GB-A-1592222 discloses the use of radio-frequency heating (i.e. in the frequency range of 10 MHz to 300 MHz) to heat a polyvinyl chloride-based plastisol, and GB-A-1327583 discloses the use of microwave radiation (in the frequency range 300 MHz - 300,000 MHz) to cure polyvinyl chloride-based plastisols.

Subsequently GB-B-2051660 has proposed a non-microwave pre-heating step followed by a microwave curing step for PVC-based plastisols, and EP-A-0155021 and EP-A-0220908 have disclosed the use of a non-RF frequency preheating step before exposure of a PVC-based plastisol to RF heating.

However, the food industry is uneasy with the use of polyvinyl chloride in packaging materials and there has for some time been a search for alternative plastisols which do not depend on polyvinyl chloride as the resin particles.

Furthermore, the manufacture and use of polyvinyl chloride involves exposing the workers and the consumers to health hazards arising from the monomeric vinyl chloride which may be present. Moreover, polyvinyl chloride is heat- and light-sensitive and tends to liberate hydrogen chloride which is corrosive, especially to metal surfaces, and which is at least an irritant if inhaled. Furthermore, polyvinyl chloride plastisols complicate efforts towards recycling and disposal because, upon incineration, polyvinyl chloride forms dioxins in addition to hydrogen chloride. Dioxins are highly toxic.

One approach to the problem of avoiding use of polyvinyl chloride comprises using copolymers of methyl methacrylate as the resin, in suspension in organic plasticizers such as phthalate plasticizers, for example dioctyl phthalate. Such a composition is disclosed in US-A-4199486, the disclosure of which is incorporated herein by reference.

Another solution employs a copolymer of a normal $\alpha$-olefin and maleic anhydride (in a 1:1 molar ratio) in suspension in a plasticizer, as disclosed in US-A-4020966, the disclosure of which is incorporated herein by reference.

Another possibility uses acrylate polymers, as disclosed in German Offenlegungsschriften DE-A-2454235 and DE-A-2529732 the disclosures of which are incorporated herein by reference.

US-A-4020966 also exemplifies the fluxing temperature of the non-PVC based plastisol as being in the range 156° to 164°C, provided the plastisol is held at that temperature for a long enough period of time, and indicates that exposure of the same non-PVC based plastisol to a higher temperature (of the order of 200°C) for a much shorter time will provide an alternative fluxing process.

Copolymers of styrene and/or alkyl styrene such as a-methyl styrene, and unsaturated carboxylic acids such as methacrylic acid, may be used with suitable plasticizer or plasticizers such as those described in the aforementioned specifications.

The plastisol may, if desired, comprise a finely divided suspension of particles comprising a core material which reacts well with the plasticizer to form a homogeneous gasket after fluxing, and a shell material which is less readily able to react with the plasticizer and which prevents premature contact between the plasticizer and the core material.

The need to choose a plasticizer which does not react with the suspended polymer at room temperature (in order to ensure that the plastisol has adequate shelf life) limits the available choice of plasticizer and one

2

EP 0 497 501 A1

would therefore expect that a plastisol which does not use polyvinyl chloride as the suspended polymer would not be suitable for the conventional processes in that it would suffer problems of viscosity stability which would render it unsuitable for lining into the closure and fluxing by electromagnetic radiation heating.

Surprisingly, we have now found that it is, after all, possible to use a plastisol which does not include polyvinyl chloride as the suspended polymer, and to flux it with electromagnetic radiation when disposed in a plastic closure, without deformation of the closure.

Accordingly, the present invention provides a method of lining a thermoplastic closure:- by introducing into the plastic closure a plastisol in liquid or pasty form and which does not include vinyl chloride as the suspended resin particles; shaping the plastisol in the closure; and curing the plastisol by exposure of the plastisol and closure to an electromagnetic field to heat the plastisol to a temperature at which the plastisol attains a fully fluxed state.

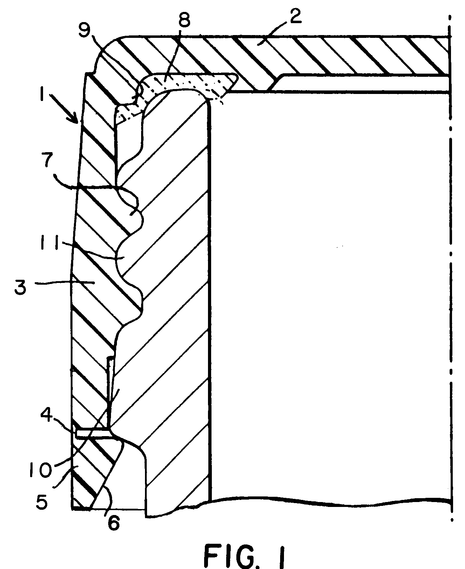

In order that the present invention may more readily be understood the following description is given, merely by way of example, with reference to the accompanying drawing in which the sole Figure illustrates a thermoplastic closure with a plastisol lining formed therein.

The drawing illustrates the closure generally designated 1 as comprising an end panel 2 having a depending skirt 3 whose rim is joined by means of frangible bridges 4 to a pilfer-proof ring 5.

The pilfer-proof ring 5 has an internal flange 6 for engagement behind an outwardly extending annular projection 10 on the container neck for holding the pilferproof ring 5 in place on the container as the cap 2, 3 is unscrewed and separates from the pilfer-proof ring by rupture of the frangible bridges 4. The flange 6 has a saw-tooth configuration to allow it to slide easily over the annular outward projection of the container neck during application of the closure, but to hold the pilfer-proof ring 5 firmly in position upon removal of the cap 2, 3.

Internally, the skirt 3 has a thread, in this case a single start thread, 7 for fastening the closure 1 on the container neck. The threads on the container neck are shown at 11.

The cap is able to seal against the upper rim of the container by virtue of a sealing gasket 8 of cured plastisol composition.

In this case the cap further includes a shoulder 9 embedded in the plastisol at the corner between the end panel 2 and the skirt 3 of the cap, to provide a local increase in the compression deformation of the gasket 8 as the closure is screwed on the container. Preferably the shoulder 9 constitutes a step in the skirt diameter, such that the diameter of the skirt between the shoulder and the rim of the skirt has a value which is greater than the diameter between the shoulder and the end panel 2, and this latter diameter between the shoulder and the end panel 2 is substantially equal to the external diameter of the neck of the container. Such an arrangement is disclosed in more detail in our GB-A-2116529.

A closure such as is shown in the drawing, in this case formed of polypropylene, is initially formed by injection moulding, with subsequent addition of the plastisol gasket 8.

There now follows a general description of one form of the process in accordance with the invention, followed by two specific examples.

In order to apply a lining to this closure the closure, complete with its pilfer-proof ring 5, is upturned from the orientation shown in the drawing, with the skirt 3 extending upwardly from the end panel 2, and a given quantity of the semi-liquid plastisol composition is injected into the closure.

The closure is then spun rapidly about'its vertical axis of symmetry to cause the plastisol to move radially outwardly and to form the illustrated build-up of plastisol over the shoulder 9 in the corner between the skirt 3 and the end panel 2.

After the cap has been advanced from the spinning chuck which effects the formation of the plastisol into the desired gasket configuration, the plastisol 8 will tend to retain its shape during an optional subsequent exposure to non-electromagnetic heating, e.g. hot air heating to heat the plastisol to a temperature at which it is in the gel state, and possibly even higher to a condition in which it is partly fluxed. The precise temperature will depend upon the selection of the plasticizer used and on the selection of the polymer used, as these determine the fluxing temperature of the plastisol.

The temperature of the air in this optional hot air heating stage will be at least 50°C.

As a next stage, either together with or instead of the optional hot air heating process, the closure and plastisol combination is subjected to electromagnetic radiation, preferably microwave radiation (covering the frequency range of 300 MHz to 300,000 MHz) more preferably at a frequency of 2450 MHz. This is one of the two permitted microwave frequencies available for industrial heating use, the other being 915 MHz.

Alternatively, as disclosed in EP-A-0220908 and EP-A-0155021 the curing of the plastisol to form the gasket 8 can be effected by use of radio-frequency heating, preferably in the range 27.10 MHz to 27.15 MHz, a frequency permitted for industrial heating application by RF radiation.

In the case of either radio-frequency heating (10 Mhz to 300 MHz) or microwave heating types of electromagnetic heating the injection moulded closure is formed of a thermoplastic which is transparent or substan-

3

tially transparent to the electromagnetic radiation. Thus the exposure to the radiation applies heat to the plastisol directly and there is minimum heating of the closure, mainly as a result of conduction from the heating plastisol.

Preferably the curing of the plastisol is carried out in an oven through which a succession of the closures, complete with the injected plastisol, is conveyed firstly through a section where hot air circulates to bring the plastisol and closure to a temperature which is at least as high as the gel point of the plastisol, and then the closures pass to a second region of the oven where the hot air circulation is preferably continued, and additionally a microwave radiation field exists through which the closures pass to acquire heat directly in the plastisol for completion of the fluxing operation.

After exposure to the microwave radiation the gasket is dimensionally stable and, on cooling, maintains the form of a rubbery mass which serves adequately as a sealing gasket to close a container on which the closure is fitted. There is no exudation of liquid plasticizer at room temperature and the elasticity of the gasket permits effective sealing to hold pressures of at least 100 psi as tested on a Secure Seal Tester ("SST") pressure tester well-known in the art.

At least one of the non-pvc polymer and the plasticiser will contain polar groups to make it susceptible to electromagnetic energy. Preferably the plasticiser contains such polar groups, and more preferably both the plasticiser and the polymer will be reactive to electromagneticenergy by incorporating such polar groups, such that the efficiency of fluxing may be enhanced by reducing the fluxing time and/or obtaining a more complete fluxing of the plastisol.

Although the closure is illustrated as having a pilfer-proof ring 5 integrally formed therewith, any other type of tamper-indicating feature may be used, either integrally with the closure or intended to be applied afterwards, or the cap 2, 3 may be cured without a tamperevident means of any kind.

Although the preferred example given above uses polypropylene as the material for the cap, any other suitable thermoplastic material, for example high density polyethylene, or polyethylene terephthalate (PET), can instead be used.

The plastisol material used for the gasket may be foamed, or not, as desired.

Where the plastisol is foamed, any suitable foaming agent may be used to liberate foaming gas upon the application of the gelling heat. Examples of such blowing agents are azobisisobutyronitrile and diazoaminobenzene; N-nitroso -compounds such as N,N'-di-methy-N,N'-dinitroso-terephthalamide; sulfonyl hydrazides such as 4,4'-oxybiz (benzenesulfonyl hydrazide).

Another possible blowing agent is azodicarbonamide. Furthermore, hollow microspheres of glass or plastic, containing a volatile liquid such as butane, known under the Trade Mark "Expancel" may be used to create a foamed structure.

There now follow two examples of processes which embody the present invention:-

## EXAMPLE 1

A plastisol was prepared comprising 80 parts of an emulsion grade copolymer of 68% methylmethacrylate, 30% butyl methacrylate, and 2% acrylic acid, with 20 parts of suspension grade polymethyl methacrylate and 80 parts of diisononyl phthalate. The additional minor constituents were:-

| | |
|---|---|
| Talc (as filler) ... | 12 parts |
| Oleylamide (slip agent)... | 4 parts |
| Titanium dioxide (pigment) ... | 2 parts |

The plastisol was deposited in polypropylene caps and the thus dosed caps were subjected to a 4 minute pass through a "Darawave" (R.T.M.) oven in which the first part of the oven (2 minutes pass time) involved exposure of the caps to a hot airstream having a temperature of 155°C, and the second part of the oven (2 minutes pass time) involved both circulation of air at 155°C and exposure to microwave radiation at 2415 MHz.

The resulting lined caps, after cooling, performed satisfactorily in a Secure Seal Tester (SST) and were found to have acceptable removal torque values and taste characteristics.

## EXAMPLE 2

A copolymer of 84 parts styrene and 16 parts methacrylic acid with 90 parts diisononyl phthalate was prepared using as minor constituents 4 parts oleylamide as slip agent and 3.4 parts titanium dioxide as pigment.

The procedure of Example 1 was repeated and the caps were found to have acceptable removal torque values, pressure holding performance, and taste characteristics.

## Claims

1. A method of lining a thermoplastic closure:-
by introducing into the plastic closure a plastisol in liquid or pasty form as the suspended resin particles; shaping the plastisol in the closure; and curing the plastisol by exposure of the plastisol and closure to an electromagnetic field to heat the plastisol to a temperature at which the plastisol attains a fully fluxed state, characterized in that the plastisol includes suspended particles of a resin which does not include vinyl chloride.

2. A method according to claim 1, comprising additionally using heating other than an electromagnetic effect, to pre-heat the combination of the closure and plastisol to a temperature below the melting point of the closure, or to apply additional heating during exposure of the combination of the plastisol and the closure to the electromagnetic radiation.

3. A method according to claim 2, wherein the non-electromagnetic heating raises the temperature of the plastisol and the closure to at least 50°C.

4. A method according to either of claims 2 and 3, wherein the non-electromagnetic heating effect is effected by exposing the closure to heat in a hot air oven.

5. A method according to any one of the preceding claims, wherein the frequency range of the electromagnetic field is from 10 to 300,000 MHz.

6. A method according to any one of the preceding claims, wherein the closure includes an integrally moulded pilfer-proof ring joined to the skirt of the cap portion of the closure by a plurality of frangible bridges.

7. A method according to any one of the preceding claims, wherein the plastisol is deposited into the closure and shaped into the gasket configuration by centrifugal action of spinning the closure and the at least semi-liquid plastisol.

8. A method according to any one of the preceding claims, wherein the plastisol comprises a suspension of finely divided particles of a normal $\alpha$ olefin and maleic anhydride; or a suspension of finely divided particles of acrylate polymers and/or copolymers in an organic plasticizer; or a finely divided suspension of particles comprising a core material which reacts well with the plasticizer to form a homogeneous gasket after fluxing, and a shell material which is less readily able to react with the plasticizer and prevents contact between the plasticizer and the core material; or a suspension of particles of a copolymer of methyl methacrylate, butyl methacrylate and acrylic acid with polymethyl methacrylate in a diisononyl phthalate plasticizer; or a suspension of particles of a styrene/methacrylic acid copolymer in diisononyl phthalate as plasticizer.

9. A method according to any one of the preceding claims, wherein at least one of the plasticizer and the resin, preferably the plasticizer, and more preferably both, contains polar groups making it susceptible to electromagnetic energy.

FIG. 1

**European Patent Office**

# EUROPEAN SEARCH REPORT

Application Number

EP 92 30 0576

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 210 567 (KÖSTERS) | 1-4,8 | B65D53/06 |
| Y | | 5-7 | C09K3/10 |
| | * column 6, line 65 - column 8, line 8 * | | |
| D | & DE-A-2 529 732 (TEROSON GMBH) | | |
| D | & DE-A-2 454 235 (TEROSON GMBH) | | |
| | --- | | |
| D,Y | GB-B-2 051 660 (W R GRACE & CO) | 5,7 | |
| | * page 4, line 10 - line 49 * | | |
| | --- | | |
| D,Y | EP-A-0 155 021 (KORNELLS' KUNSTHARS PRODUCTEN INDUSTRIE B.V.) | 6 | |
| | * abstract * | | |
| | ----- | | |
| | | | TECHNICAL FIELDS SEARCHED (Int. Cl.5) |
| | | | B65D |
| | | | C09K |
| | | | C08F |

The present search report has been drawn up for all claims

| Place of search | Date of completion of the search | Examiner |
|---|---|---|
| BERLIN | 07 MAY 1992 | SMITH C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)